(19) Europäisches Patentamt
European Patent Office
Office européen des brevets

(11) EP 4 538 757 A1

(12) EUROPEAN PATENT APPLICATION

(43) Date of publication:
**16.04.2025 Bulletin 2025/16**

(21) Application number: **24205548.1**

(22) Date of filing: **09.10.2024**

(51) International Patent Classification (IPC):
***G02B 5/30*** (2006.01) ***G02B 5/02*** (2006.01)

(52) Cooperative Patent Classification (CPC):
**G02B 5/3033; G02B 5/0205;** G02B 5/0236

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.10.2023 JP 2023175528**

(71) Applicant: **Nitto Denko Corporation**
**Ibaraki-shi, Osaka 567-8680 (JP)**

(72) Inventors:
- **KAWAGUCHI, Tomohiko**
**Osaka, 567-8680 (JP)**
- **ONO, Hirotomo**
**Osaka, 567-8680 (JP)**
- **SENDA, Hiroki**
**Osaka, 567-8680 (JP)**
- **IZAKI, Akinori**
**Osaka, 567-8680 (JP)**

(74) Representative: **Hoffmann Eitle**
**Patent- und Rechtsanwälte PartmbB**
**Arabellastraße 30**
**81925 München (DE)**

# (54) OPTICAL LAMINATE AND DISPLAY APPARATUS

(57) Provided is an optical laminate suitable for a display apparatus using a plurality of display panels. An optical laminate 60 includes: a polarizing plate 30 including a polarizing film 10 having a first main surface 10a and a second main surface 10b opposed to each other; a first pressure-sensitive adhesive layer 41 arranged on the first main surface 10a side of the polarizing film 10; and a second pressure-sensitive adhesive layer 42 arranged on the second main surface 10b side of the polarizing film 10. At least one of the first pressure-sensitive adhesive layer 41 or the second pressure-sensitive adhesive layer 42 has a haze of 66% or more. The polarizing film 10 includes a polyvinyl alcohol-based film containing iodine and contains a compound including a nitroxy radical or a nitroxide group.

EP 4 538 757 A1

## Description

### Technical Field

The present invention relates to an optical laminate and a display apparatus.

### Background Art

Depending on the application of a display apparatus typified by a liquid crystal display apparatus, there may be a demand for a further improvement in contrast of an image to be displayed.

For example, as a technology for improving the contrast of a liquid crystal display apparatus, there has been proposed a technology involving overlapping two display panels and displaying an image on each of the display panels (see, for example, Patent Literature 1). Specifically, it has been proposed that the contrast be improved by displaying a color image on the display panel on a front side (observer side) out of the two display panels arranged front to back and displaying a monochrome image on the display panel on the back side (backlight side).

### Citation List

### Patent Literature

[PTL 1] JP 2007-310161 A

### Summary of Invention

### Technical Problem

In a display apparatus, in order to achieve image display and enhance the performance of the image display, optical members, such as a polarizing member and a retardation member, are generally used. However, in a display apparatus using a plurality of display panels, there may arise problems that do not occur in a display apparatus using one display panel.

In view of the foregoing, a primary object of the present invention is to provide an optical laminate suitable for a display apparatus using a plurality of display panels.

### Solution to Problem

1. According to at least one embodiment of the present invention, there is provided an optical laminate, including: a polarizing plate including a polarizing film having a first main surface and a second main surface opposed to each other; a first pressure-sensitive adhesive layer arranged on a first main surface side of the polarizing film; and a second pressure-sensitive adhesive layer arranged on a second main surface side of the polarizing film, wherein at least one of the first pressure-sensitive adhesive layer or the second pressure-sensitive adhesive layer has a haze of 66% or more, and wherein the polarizing film includes a polyvinyl alcohol-based film containing iodine and contains a compound including one of a nitroxy radical or a nitroxide group.

2. In the optical laminate according to the above-mentioned item 1, the second pressure-sensitive adhesive layer may have a haze of 66% or more.

3. The optical laminate according to the above-mentioned item 2 may further include a third pressure-sensitive adhesive layer arranged on the second main surface side of the polarizing film.

4. The optical laminate according to the above-mentioned item 2 or 3 may further include a support arranged on the second main surface side of the polarizing film.

5. In the optical laminate according to any one of the above-mentioned items 1 to 4, the polarizing film may contain the compound including one of a nitroxy radical or a nitroxide group in a content of 20 wt% or less.

6. In the optical laminate according to any one of the above-mentioned items 1 to 5, the polarizing film may contain the

iodine in a content of 1 wt% or more and 15 wt% or less.

7. In the optical laminate according to any one of the above-mentioned items 1 to 6, the first pressure-sensitive adhesive layer may be formed of a pressure-sensitive adhesive composition containing a (meth)acrylic polymer and a cross-linking agent, the cross-linking agent may contain an isocyanate-based cross-linking agent, and a content of the isocyanate-based cross-linking agent may be less than 1 part by weight with respect to 100 parts by weight of the (meth)acrylic polymer.

8. In the optical laminate according to the above-mentioned item 7, the isocyanate-based cross-linking agent may be a non-aromatic system.

9. According to at least one embodiment of the present invention, there is provided a display apparatus, in which a plurality of display panels each including a liquid crystal cell are arranged so as to overlap each other, and which is configured to display an image on each of the display panels, the display apparatus including: a first display panel; a second display panel arranged at a position closer to an observer as compared to the first display panel; and the optical laminate of any one of the above-mentioned items 1 to 8 arranged between the first display panel and the second display panel, wherein the first pressure-sensitive adhesive layer of the optical laminate is bonded to the first display panel.

Advantageous Effects of Invention

According to the optical laminate according to at least one embodiment of the present invention, characteristics of the display apparatus using the plurality of display panels can be improved.

Brief Description of Drawings

FIG. 1 is a schematic sectional view for illustrating a schematic configuration of an optical laminate according to a first embodiment of the present invention.

FIG. 2 is a schematic sectional view for illustrating a schematic configuration of an optical laminate according to a second embodiment of the present invention.

FIG. 3 is a schematic sectional view for illustrating the outline of a liquid crystal display apparatus according to at least one embodiment of the present invention.

Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention. In addition, in the drawings, the same or similar components are denoted by the same reference symbols, and repetitive description thereof may be omitted.

(Definitions of Terms and Symbols)

The definitions of terms and symbols used herein are as described below.

(1) Refractive Indices (nx, ny, and nz)

"nx" represents a refractive index in a direction in which an in-plane refractive index is maximum (that is, slow axis direction), "ny" represents a refractive index in a direction perpendicular to a slow axis in a plane (that is, fast axis direction), and "nz" represents a refractive index in a thickness direction.

(2) In-plane Retardation (Re)

"Re(λ)" refers to an in-plane retardation measured at 23°C with light having a wavelength of λ nm. For example, "Re(550)" refers to an in-plane retardation measured at 23°C with light having a wavelength of 550 nm. The Re(λ) is determined from the equation "Re(λ)=(nx-ny)×d" when the thickness of a layer (film) is represented by "d" (nm).

(3) Thickness Direction Retardation (Rth)

"Rth(λ)" refers to a thickness direction retardation measured at 23°C with light having a wavelength of λ nm. For example, "Rth(550)" refers to a thickness direction retardation measured at 23°C with light having a wavelength of 550 nm. The Rth(λ) is determined from the equation "Rth(λ)=(nx-nz)×d" when the thickness of a layer (film) is represented by "d" (nm).

(4) Nz Coefficient

An Nz coefficient is determined from the equation "Nz=Rth/Re" .

(5) Angle

When reference is made to an angle herein, the angle encompasses both angles in a clockwise direction and a counterclockwise direction with respect to a reference direction. Accordingly, for example, the term "45°" means ±45°.

[Optical Laminate]

FIG. **1** is a schematic sectional view for illustrating a schematic configuration of an optical laminate according to a first embodiment of the present invention. An optical laminate **60** includes a polarizing plate **30.** The polarizing plate **30** includes a polarizing film **10** having a first main surface **10a** and a second main surface **10b** opposed to each other, a first protective layer **21** arranged on the first main surface **10a** side of the polarizing film **10,** and a second protective layer **22** arranged on the second main surface **10b** side of the polarizing film **10.** In addition, the optical laminate **60** includes a first pressure-sensitive adhesive layer **41** arranged on the first main surface **10a** side of the polarizing film **10** and a second pressure-sensitive adhesive layer **42** arranged on the second main surface **10b** side of the polarizing film **10.** The first protective layer **21** may also function as a retardation layer. In this case, the first protective layer (retardation layer) **21** may have any appropriate optical characteristics (e.g., refractive index characteristics, an in-plane retardation, an Nz coefficient, and a photoelastic coefficient).

Although not shown, the polarizing plate **30** may include an adhesive layer for bonding the protective layer to the polarizing film **10.** In the polarizing plate **30** illustrated in FIG. **1,** an adhesive layer may be formed between the polarizing film 10 and the first protective layer **21,** and another adhesive layer may be formed between the polarizing film **10** and the second protective layer **22.**

The optical laminate **60** includes a support **50** arranged on the second main surface **10b** side of the polarizing film **10.** Then, the second pressure-sensitive adhesive layer **42** is arranged between the polarizing plate **30** and the support **50.** Specifically, the support **50** is bonded to the polarizing plate **30** via the second pressure-sensitive adhesive layer **42.**

The optical laminate **60** includes a third pressure-sensitive adhesive layer **43** arranged on the second main surface **10b** side of the polarizing film **10.** In the illustrated example, the third pressure-sensitive adhesive layer **43** is formed on the surface of the support **50.** The optical laminate **60** can be bonded to other members via the first pressure-sensitive adhesive layer **41** and the third pressure-sensitive adhesive layer **43.** For example, the optical laminate **60** can be bonded to display panels via the first pressure-sensitive adhesive layer **41** and the third pressure-sensitive adhesive layer **43.**

Practically, a release liner (not shown) is bonded to each of the surfaces of the first pressure-sensitive adhesive layer **41** and the third pressure-sensitive adhesive layer **43,** and the first pressure-sensitive adhesive layer **41** and the third pressure-sensitive adhesive layer **43** can be protected by the release liners. The release liners are, for example, temporarily bonded to the first pressure-sensitive adhesive layer **41** and the third pressure-sensitive adhesive layer **43** until the optical laminate **60** is put into use. Specifically, the release liners are temporarily bonded to the first pressure-sensitive adhesive layer **41** and the third pressure-sensitive adhesive layer **43** until the optical laminate **60** is bonded to the display panels. A plastic film having the surface coated with a release agent is typically used as the release liner.

FIG. **2** is a schematic sectional view for illustrating a schematic configuration of an optical laminate according to a second embodiment of the present invention. The second embodiment is different from the above-mentioned first embodiment in that an optical laminate **61** is free of the support **50** and the third pressure-sensitive adhesive layer **43.** In the second embodiment, the optical laminate **61** can be bonded to another member via the second pressure-sensitive

adhesive layer **42** instead of the third pressure-sensitive adhesive layer **43.** Then, practically, a release liner (not shown) is bonded to the surface of the second pressure-sensitive adhesive layer **42,** and the second pressure-sensitive adhesive layer **42** can be protected by the release liner.

At least one of the first pressure-sensitive adhesive layer 41 or the second pressure-sensitive adhesive layer 42 has a haze of, for example, 66% or more and 99% or less, preferably 70% or more. The pressure-sensitive adhesive layer having such haze can function, for example, as a light diffusion layer.

The pressure-sensitive adhesive layer that may satisfy the above-mentioned haze typically contains fine particles. Examples of the fine particles in the pressure-sensitive adhesive layer include: inorganic fine particles that may have conductivity, such as silica, alumina, titania, zirconia, calcium oxide, tin oxide, indium oxide, cadmium oxide, and antimony oxide; cross-linked or uncross-linked organic fine particles formed of various polymers, such as polymethyl methacrylate, polystyrene, polyurethane, an acrylic-styrene copolymer, benzoguanamine, melamine, and polycarbonate; and silicone-based fine particles. Of those, spherical silica particles, spherical glass beads, and spherical silicone particles are preferably used. Those fine particles may be used alone or in combination thereof.

The particle diameter of each of the above-mentioned fine particles may be, for example, designed to be smaller than the thickness of the pressure-sensitive adhesive layer (light diffusion layer). When the particle diameter of the fine particle is larger than the thickness of the pressure-sensitive adhesive layer, unevenness may occur on the surface of the pressure-sensitive adhesive layer. The particle diameter of the fine particle is preferably from 1 $\mu$m to 50 pm, more preferably from 2 $\mu$m to 10 $\mu$m.

The content of the fine particles in the pressure-sensitive adhesive layer is, for example, from 1 wt% to 50 wt%, preferably from 1 wt% to 10 wt%. In one embodiment, the haze of the pressure-sensitive adhesive layer can be controlled by adjusting the content of the fine particles in the pressure-sensitive adhesive layer.

<Polarizing Film>

The polarizing film is typically a film containing a dichroic substance (typically, iodine). The polarizing film may be formed by, for example, having iodine adsorbed to and oriented in a polyvinyl alcohol-based film.

The thickness of the polarizing film is not particularly limited, and is, for example, 1 um or more and 50 um or less. The thickness of the polarizing film is preferably 40 um or less, more preferably 30 um or less, still more preferably 20 um or less. Meanwhile, the thickness of the polarizing film is preferably 2 um or more, more preferably 3 um or more.

The polarizing film preferably exhibits absorption dichroism at any one of wavelengths of from 380 nm to 780 nm. The cross transmittance (Tc) of the polarizing film is preferably 0.5% or less, more preferably 0.1% or less, still more preferably 0.05% or less. The single layer transmittance (Ts) of the polarizing film is, for example, from 41.0% to 45.0%, preferably 42.0% or more. The polarization degree (P) of the polarizing film is, for example, from 97.0% to 99.997%, preferably 99.0% or more, more preferably 99.5% or more, still more preferably 99.9% or more.

The above-mentioned cross transmittance, single layer transmittance, and polarization degree may be measured, for example, with a UV-visible spectrophotometer. The single layer transmittance Ts, the parallel transmittance Tp, and the cross transmittance Tc are measured with the UV-visible spectrophotometer, and the polarization degree P may be determined by the following equation from the resultant Tp and Tc. The Ts, the Tp, and the Tc are each a Y value measured with the two-degree field of view (C light source) of JIS Z 8701 and subjected to visibility correction.

$$\text{Polarization degree } P(\%) = \{(Tp - Tc)/(Tp + Tc)\}^{1/2} \times 100$$

As a material of the polyvinyl alcohol-based film, there may be given, for example, polyvinyl alcohol or a derivative thereof. Examples of the derivative of polyvinyl alcohol include: polyvinyl formal, polyvinyl acetal; and products obtained by modifying polyvinyl alcohol with olefins, such as ethylene and propylene; unsaturated carboxylic acids, such as acrylic acid, methacrylic acid, and crotonic acid, alkyl esters thereof, acrylamide or the like. The average polymerization degree of polyvinyl alcohol is preferably from 100 to 10,000, more preferably from 1,000 to 10,000, still more preferably from 1,500 to 4,500. The saponification degree of the polyvinyl alcohol is preferably from 80 mol% to 100 mol%, more preferably from 95 mol% to 99.95 mol%. The average polymerization degree and the saponification degree may be determined in conformity with JIS K 6726.

The polyvinyl alcohol-based film may contain an additive, such as a plasticizer or a surfactant. Examples of the plasticizer include polyols, such as glycerin, diglycerin, triglycerin, ethylene glycol, propylene glycol, and polyethylene glycol, and condensates thereof. The content of the additive in the polyvinyl alcohol-based film is preferably 20 wt% or less.

The content of iodine (iodine concentration) of the polarizing film is, for example, 1 wt% or more and 15 wt% or less. The content of iodine of the polarizing film is preferably 1.5 wt% or more, more preferably 2 wt% or more. When the content of iodine falls within such ranges, excellent durability can be obtained. For example, decoloring can be satisfactorily suppressed. Meanwhile, the content of iodine of the polarizing film is preferably 12 wt% or less, more preferably 10 wt% or less. When the content of iodine falls within such ranges, for example, polyene formation can be

suppressed. The content of iodine of the polarizing film means the amount of the entire iodine contained in the polarizing film. Specifically, iodine may exist in the polarizing film in the form of an iodine ion ($I^-$), an iodine molecule ($I_2$), a polyiodine ion ( $I_3^-$, $I_5^-$), or the like, and the content of iodine means the amount of iodine that includes all these forms. The content of iodine may be calculated, for example, by a calibration curve method of X-ray fluorescence analysis.

It is preferred that the polarizing film contain a hindered amine-based compound. Alternatively, it is preferred that the polarizing film contain a compound including a nitroxy radical or a nitroxide group. Through incorporation of such compound, for example, a significant decrease in single layer transmittance of the polarizing film and discoloration thereof under a high-temperature environment (e.g., 95°C or more) can be suppressed. It is conceived that the foregoing is achieved by the fact that the polyene formation of polyvinyl alcohol under a high-temperature environment can be suppressed. Specifically, it is conceived that the foregoing is achieved by the fact that a radical generated in a polyene formation reaction can be captured.

The molecular weight of the above-mentioned hindered amine-based compound is preferably 1,000 or less, more preferably 500 or less, still more preferably 300 or less. When the polarizing film contains such compound, for example, a decrease in single layer transmittance of the polarizing film under a high-temperature environment can be satisfactorily suppressed.

The molecular weight of the above-mentioned compound including a nitroxy radical or a nitroxide group is preferably 1,000 or less, more preferably 500 or less, still more preferably 300 or less. When the polarizing film contains such compound, for example, a decrease in single layer transmittance of the polarizing film under a high-temperature environment can be satisfactorily suppressed.

It is preferred that the above-mentioned hindered amine-based compound be, for example, a water-soluble hindered amine-based compound that can be dissolved in an amount of 1 part by weight or more with respect to 100 parts by weight of water at 25°C. As the hindered amine-based compound, a compound that can be dissolved in an amount of 2 parts by weight or more with respect to 100 parts by weight of water at 25°C is preferably used, and a compound that can be dissolved in an amount of 5 parts by weight or more with respect to 100 parts by weight of water at 25°C is more preferably used. Such compound can be, for example, efficiently caused to permeate the polarizing film.

The above-mentioned hindered amine-based compound may be a secondary amine or a tertiary amine in which carbon adjacent to an amino group is substituted with an alkyl group, and hence the amino group is sterically protected, and an example thereof is a compound including an organic group having the following structure.

A N-oxyl compound (compound having C-N(-C)O$^\cdot$ (O$^\cdot$ represents an oxyradical) as a functional group) is preferably used as the compound including a nitroxy radical or a nitroxide group from the viewpoint that the compound has a comparably stable radical at room temperature and in air. An example of the N-oxyl compound is a compound including an organic group having the following structure.

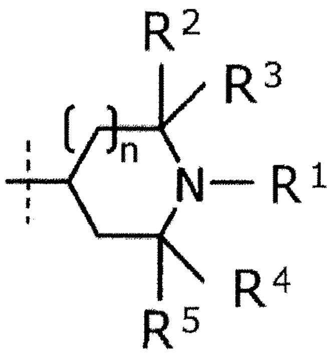

・・・(1)

In the general formula (1), $R^1$ may represent an oxyradical, or $R^1$ may represent an oxyradical, a hydrogen atom, a hydroxy group, or an alkyl group, hydroxyalkyl group, hydroxyalkoxy group, or alkoxy group having 1 to 30 carbon atoms. In addition, in the general formula (1), $R^2$ to $R^5$ each independently represent a hydrogen atom or an alkyl group having 1 to 10 carbon atoms, and "n" represents 0 or 1. The left of the dotted line portion in the general formula (1) represents any appropriate organic group.

Examples of the compound including an organic group include compounds represented by the following general formulae (2) to (5).

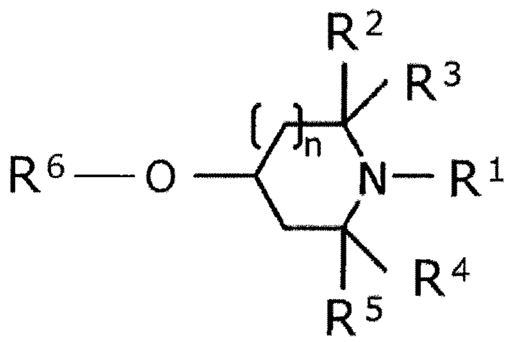

・・・(2)

In the general formula (2), $R^1$ to $R^5$ and "n" are the same as those described above, and $R^6$ represents a hydrogen atom, or an alkyl group having 1 to 10 carbon atoms, an acyl group, or an aryl group.

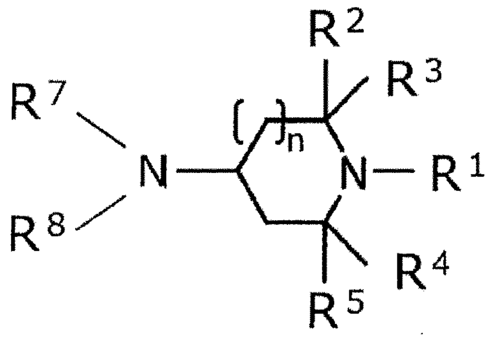

・・・(3)

In the general formula (3), $R^1$ to $R^5$ and "n" are the same as those described above, and $R^7$ and $R^8$ each independently represent a hydrogen atom, or an alkyl group having 1 to 10 carbon atoms, an acyl group, or an aryl group.

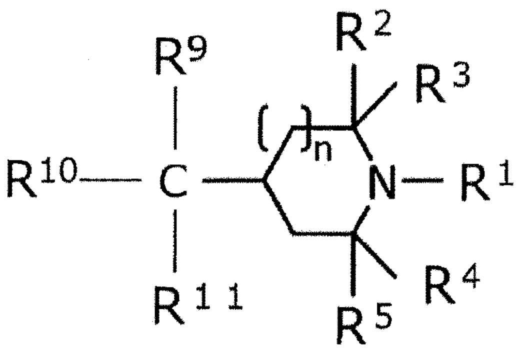

・・・(4)

In the general formula (4), $R^1$ to $R^5$ and "n" are the same as those described above, and $R^9$ to $R^{11}$ each independently represent a hydrogen atom, or an alkyl group having 1 to 10 carbon atoms, an acyl group, an amino group, an alkoxy group, a hydroxy group, or an aryl group.

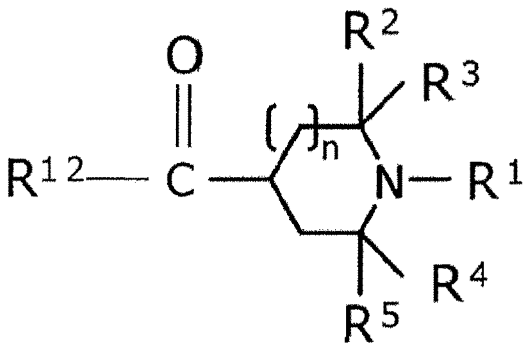

· · · (5)

In the general formula (5), $R^1$ to $R^5$ and "n" are the same as those described above, and $R^{12}$ represents a hydrogen atom, or an alkyl group having 1 to 10 carbon atoms, an amino group, an alkoxy group, a hydroxy group, or an aryl group.

In the above-mentioned general formulae (1) to (5), $R^1$ represents preferably an oxyradical, a hydrogen atom, a hydroxy group, or an alkyl group, more preferably an oxyradical group, for example, from the viewpoint of efficiently suppressing the accelerated degradation of polyvinyl alcohol. In the above-mentioned general formulae (1) to (5), $R^2$ to $R^5$ each represent preferably an alkyl group having 1 to 6 carbon atoms, more preferably an alkyl group having 1 to 3 carbon atoms, for example, from the viewpoint of ease of availability. In the above-mentioned general formula (2), $R^6$ represents preferably a hydrogen atom or an alkyl group having 1 to 10 carbon atoms, more preferably a hydrogen atom, for example, from the viewpoint of ease of availability. In the above-mentioned general formula (3), $R^7$ and $R^8$ each independently represent preferably a hydrogen atom or an alkyl group having 1 to 10 carbon atoms, more preferably a hydrogen atom, for example, from the viewpoint of ease of availability. In the above-mentioned general formulae (4), $R^9$ to $R^{11}$ each represent preferably a hydrogen atom or an alkyl group having 1 to 10 carbon atoms, for example, from the viewpoint of ease of availability. In the above-mentioned general formula (5), $R^{12}$ represents preferably a hydroxy group, an amino group, or an alkoxy group, for example, from the viewpoint of ease of availability. In the above-mentioned general formulae (1) to (5), "n" represents preferably 1, for example, from the viewpoint of ease of availability.

The hindered amine-based compound may encompass, for example, such 2,2,6,6-tetraalkylpiperidine compounds as described in the fifth column to eleventh column of US Patent No. 4,619,956 and the third column to fifth column of US Patent No. 4,839,405, or acid addition salts thereof or a complex formed of any of the above-mentioned compounds and a metal compound.

An example of the N-oxyl compound is a N-oxyl compound described in, for example, Japanese Patent Application Laid-open No. 2003-64022, Japanese Patent Application Laid-open No. Hei 11-222462, Japanese Patent Application Laid-open No. 2002-284737, or WO 2016/047655 A1. In addition, examples of the compound including a nitroxy radical or a nitroxide group include the following compounds.

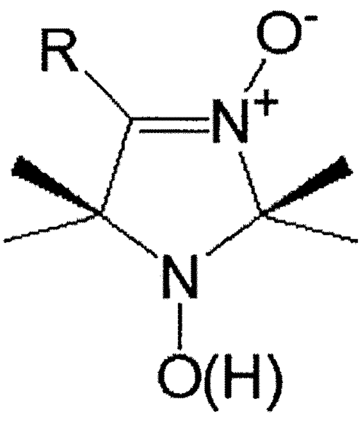

· · · (6)

In the general formula (6), R represents a hydrogen atom, or an alkyl group having 1 to 10 carbon atoms, an acyl group, or an aryl group.

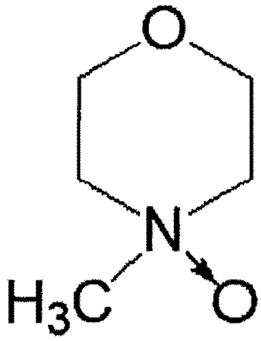

. . . (7)

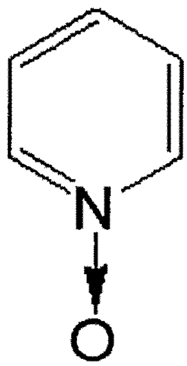

. . . (8)

The content of the hindered amine-based compound in the polarizing film is, for example, 0.005 wt% or more, preferably 0.01 wt% or more, more preferably 0.02 wt% or more. With such content, for example, a decrease in single layer transmittance of the polarizing film under a high-temperature environment can be satisfactorily suppressed. Meanwhile, the content of the hindered amine-based compound in the polarizing film is, for example, 20 wt% or less, preferably 15 wt% or less, more preferably 12 wt% or less, still more preferably 10 wt% or less.

The content of the compound including a nitroxy radical or a nitroxide group in the polarizing film is, for example, 0.005 wt% or more, preferably 0.01 wt% or more, more preferably 0.02 wt% or more. With such content, for example, a decrease in single layer transmittance of the polarizing film under a high-temperature environment can be satisfactorily suppressed. Meanwhile, the content of the compound including a nitroxy radical or a nitroxide group in the polarizing film is, for example, 20 wt% or less, preferably 15 wt% or less, more preferably 12 wt% or less, still more preferably 10 wt% or less.

The polarizing film may be produced by any appropriate method. Specifically, the polarizing film can be obtained by subjecting a polyvinyl alcohol-based film (including a polyvinyl alcohol-based resin layer formed on a substrate) to various kinds of treatment, such as dyeing treatment with iodine, stretching treatment, swelling treatment, cross-linking treatment, washing treatment, and drying treatment. The various kinds of treatment are well known and commonly used in the art, and hence a detailed description thereof is omitted.

When at least one of the above-mentioned hindered amine-based compound or the above-mentioned compound including a nitroxy radical or a nitroxide group (hereinafter sometimes simply referred to as "predetermined compound") is incorporated into the polarizing film, for example, the predetermined compound is incorporated into a treatment bath used in at least one of the above-mentioned various kinds of treatment. In at least one embodiment of the present invention, the predetermined compound is incorporated into a washing bath of the washing treatment after the dyeing treatment, the cross-linking treatment, and the stretching treatment are performed. According to such form, the content of the predetermined compound and the content of iodine in a polarizing film to be obtained can be satisfactorily adjusted.

The concentration of the predetermined compound in the treatment bath is, for example, 0.01 wt% or more and 30 wt% or less, preferably 0.05 wt% or more and 25 wt% or less, more preferably 0.1 wt% or more and 20 wt% or less.

The treatment bath to be used in each of the various kinds of treatment (e.g., dyeing treatment, stretching treatment, swelling treatment, cross-linking treatment, and washing treatment) may contain an additive. Examples of the additive include a zinc salt, a pH adjuster, a pH buffer, and any other salt. Examples of the zinc salt include: halogenated zincs, such as zinc chloride and zinc iodide; and inorganic zinc salts, such as zinc sulfate and zinc acetate. Examples of the pH adjuster include: strong acids, such as hydrochloric acid, sulfuric acid, and nitric acid; and strong bases, such as sodium hydroxide and potassium hydroxide. Examples of the pH buffer include: carboxylic acids, such as acetic acid, oxalic acid, and citric acid, and salts thereof; and inorganic weak acids, such as phosphoric acid and carbonic acid, and salts thereof.

Examples of the other salt include: chlorides, such as sodium chloride, potassium chloride, and barium chloride; nitric acid salts, such as sodium nitrate and potassium nitrate; sulfuric acid salts, such as sodium sulfate and potassium sulfate; and salts of alkali metals and alkaline earth metals.

<Protective Layer>

The above-mentioned protective layers may each include any appropriate film that can be used as the protective layer of the polarizing film. As a material serving as a main component of the film for forming the protective layer, there are given, for example: cellulose-based resins such as triacetyl cellulose (TAC); polyester-based resins; polyvinyl alcohol-based resins; polycarbonate-based resins; polyamide-based resins; polyimide-based resins; polyethersulfone-based resins; polysulfone-based resins; polystyrene-based resins; cycloolefin-based resins such as polynorbornene; polyolefin-based resins; (meth)acrylic resins; and acetate-based resins. Herein, the term "(meth)acrylic" refers to acrylic and/or methacrylic.

The above-mentioned protective layer (e.g., the second protective layer **22)** may be subjected to surface treatment such as hard coat treatment as required. Specifically, the protective layer may include a laminated film including the above-mentioned film as a substrate and a surface-treated layer formed on the substrate. The thickness of the surface-treated layer is preferably, from 1 um to 20 μm, more preferably from 3 um to 15 μm, still more preferably from 5 um to 12 μm.

The thickness of the protective layer may be appropriately set. The thickness of the protective layer is preferably from 10 um to 80 um, more preferably from 15 um to 70 μm, still more preferably from 20 um to 50 um. When the protective layer is subjected to surface treatment, the thickness of the protective layer is the thickness including the thickness of a surface-treated layer.

In at least one embodiment of the present invention, it is preferred that the protective layer (e.g., the first protective layer **21)** be optically isotropic. The phrase "optically isotropic" as used herein means that the in-plane retardation Re (550) is from 0 nm to 10 nm, and the thickness direction retardation Rth(550) thereof is from -10 nm to +10 nm. In at least one embodiment of the present invention, the protective layer (e.g., the first protective layer **21)** may function as a retardation layer.

<Adhesive Layer>

The form of an adhesive for forming the adhesive layer is not particularly limited, and for example, an aqueous adhesive, a solvent-based adhesive, a hot-melt adhesive, or an active energy ray-curable adhesive is used. Of those, the aqueous adhesive or the active energy ray-curable adhesive is preferably used, for example, because the thickness of the adhesive layer can be reduced. The thickness of the adhesive layer is preferably from 0.01 μm to 5 μm, more preferably from 0.03 μm to 3 μm.

<Pressure-sensitive Adhesive Layer>

The thickness of each of the above-mentioned pressure-sensitive adhesive layers may be set to any appropriate thickness. For example, in the first embodiment, the thickness of each of the first pressure-sensitive adhesive layer **41** and the second pressure-sensitive adhesive layer 42 is preferably from 1 um to 50 μm, more preferably from 5 um to 30 um. In addition, the thickness of the third pressure-sensitive adhesive layer 43 is preferably from 20 um to 500 μm, more preferably from 100 um to 300 um. For example, in the second embodiment, the thickness of the first pressure-sensitive adhesive layer **41** is preferably from 1 um to 50 μm, more preferably from 5 um to 30 um. In addition, the thickness of the second pressure-sensitive adhesive layer **42** is preferably from 20 um to 500 μm, more preferably from 100 um to 300 μm.

The pressure-sensitive adhesive layers may each include any appropriate pressure-sensitive adhesive. As a specific example, the pressure-sensitive adhesive layers may each include a pressure-sensitive adhesive containing, as a base polymer, an acrylic polymer, a silicone-based polymer, polyester, polyurethane, polyamide, polyether, or a fluorine-based or rubber-based polymer. A pressure-sensitive adhesive having desired characteristics in accordance with purposes can be prepared by adjusting, for example, the kinds, number, combination, and blending ratios of monomers for forming a base polymer of the pressure-sensitive adhesive, and the blending amount of the cross-linking agent, a reaction temperature, and a reaction time. The base polymers of the pressure-sensitive adhesive may be used alone or in combination thereof. An acrylic polymer is preferably used as the base polymer. Specifically, the pressure-sensitive adhesive layers each preferably include an acrylic pressure-sensitive adhesive.

The first pressure-sensitive adhesive layer **41** may require, for example, durability (e.g., prevention of coloring by heating). The first pressure-sensitive adhesive layer **41** is formed of, for example, a pressure-sensitive adhesive composition containing a (meth)acrylic polymer containing an alkyl (meth)acrylate and a cross-linking agent.

The (meth)acrylic polymer typically contains an alkyl (meth)acrylate as a main component. The term "(meth)acrylate" refers to an acrylate and/or a methacrylate.

Example of the alkyl group in the alkyl (meth)acrylate include linear or branched alkyl groups each having 1 to 18 carbon atoms. Specific examples of the alkyl group include a methyl group, an ethyl group, a propyl group, an isopropyl group, a butyl group, an isobutyl group, an amyl group, a hexyl group, a cyclohexyl group, a heptyl group, a 2-ethylhexyl group, an isooctyl group, a nonyl group, a decyl group, an isodecyl group, a dodecyl group, an isomyristyl group, a lauryl group, a tridecyl group, a pentadecyl group, a hexadecyl group, a heptadecyl group, and an octadecyl group. Those alkyl groups may be used alone or in combination thereof. The average number of carbon atoms of the alkyl group is preferably from 3 to 9.

The content of the alkyl (meth)acrylate in the (meth)acrylic polymer is, for example, from 50 parts by weight to 95 parts by weight, preferably from 70 parts by weight to 90 parts by weight with respect to 100 parts by weight of monomers for forming the (meth)acrylic polymer.

One or more copolymerizable monomers selected from an aromatic ring-containing (meth)acrylate, an amide group-containing monomer, a carboxyl group-containing monomer, and a hydroxyl group-containing monomer may be used as monomer components for forming the (meth)acrylic polymer in addition to the above-mentioned alkyl (meth) acrylate. Those copolymerizable monomers may be used alone or in combination thereof.

The aromatic ring-containing (meth)acrylate is a compound having an aromatic ring structure in its structure, and having a (meth)acryloyl group. Examples of the aromatic ring of the aromatic ring-containing (meth)acrylate include a benzene ring, a naphthalene ring, and a biphenyl ring. Specific examples of the aromatic ring-containing (meth)acrylate include: (meth)acrylates each having a benzene ring, such as benzyl (meth)acrylate, phenyl (meth)acrylate, o-phenylphenol (meth)acrylate, phenoxy (meth)acrylate, phenoxyethyl (meth)acrylate, phenoxypropyl (meth)acrylate, phenoxy diethylene glycol (meth)acrylate, an ethylene oxide-modified nonylphenol (meth)acrylate, an ethylene oxide-modified cresol (meth)acrylate, a phenol ethylene oxide-modified (meth)acrylate, 2-hydroxy-3-phenoxypropyl (meth)acrylate, methoxybenzyl (meth)acrylate, chlorobenzyl (meth)acrylate, cresyl (meth)acrylate, and polystyryl (meth)acrylate; (meth) acrylates each having a naphthalene ring, such as hydroxyethylated β-naphthol acrylate, 2-naphthoethyl (meth)acrylate, 2-naphthoxyethyl acrylate, and 2-(4-methoxy-1-naphthoxy)ethyl (meth)acrylate; and (meth)acrylates each having a biphenyl ring such as biphenyl (meth)acrylate. Of those, benzyl (meth)acrylate and phenoxyethyl (meth)acrylate are preferably used, for example, from the viewpoint of improving the pressure-sensitive adhesive property and durability of each pressure-sensitive adhesive layer.

When the aromatic ring-containing (meth)acrylate is used as the monomer component, the copolymerization amount of the aromatic ring-containing (meth)acrylate is preferably 3 wt% or more, more preferably 8 wt% or more, still more preferably 12 wt% or more with respect to all monomer components for forming the (meth)acrylic polymer. The upper limit of the copolymerization amount of the aromatic ring-containing (meth)acrylate is preferably 25 wt% or less, more preferably 22 wt% or less, still more preferably 20 wt% or less.

The amide group-containing monomer is a compound having an amide group in its structure, and having a polymerizable unsaturated double bond, such as a (meth)acryloyl group or a vinyl group. Examples of the amide group-containing monomer include: acrylamide-based monomers, such as (meth)acrylamide, N,N-dimethyl(meth)acrylamide, N,N-diethyl(meth)acrylamide, N-isopropylacrylamide, N-methyl(meth)acrylamide, N-butyl(meth)acrylamide, N-hexyl(meth)acrylamide, N-methylol (meth)acrylamide, N-methylol-N-propane(meth)acrylamide, aminomethyl(meth)acrylamide, aminoethyl(meth)acrylamide, mercaptomethyl(meth)acrylamide, and mercaptoethyl(meth)acrylamide; N-acryloyl heterocyclic monomers, such as N-(meth)acryloylmorpholine, N-(meth)acryloylpiperidine, and N-(meth)acryloylpyrrolidine; and N-vinyl group-containing lactam-based monomers, such as N-vinylpyrrolidone and N-vinyl-ε-caprolactam. Of those, a N-vinyl group-containing lactam-based monomer is preferably used, for example, from the viewpoint of improving the durability.

The carboxyl group-containing monomer is a compound having a carboxyl group in its structure, and having a polymerizable unsaturated double bond, such as a (meth)acryloyl group or a vinyl group. Examples of the carboxyl group-containing monomer include (meth)acrylic acid, carboxyethyl (meth)acrylate, carboxypentyl (meth)acrylate, itaconic acid, maleic acid, fumaric acid, and crotonic acid. Of those, acrylic acid is preferably used, for example, from the viewpoint of improving the pressure-sensitive adhesive property.

The hydroxyl group-containing monomer is a compound having a hydroxyl group in its structure, and having a polymerizable unsaturated double bond, such as a (meth)acryloyl group or a vinyl group. Examples of the hydroxyl group-containing monomer include: hydroxyalkyl (meth)acrylates, such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, and 12-hydroxylauryl (meth)acrylate; and (4-hydroxymethylcyclohexyl)-methyl acrylate. Of those, 2-hydroxyethyl (meth)acrylate and 4-hydroxybutyl (meth)acrylate are preferably used, and 4-hydroxybutyl (meth)acrylate is more preferably used, for example, from the viewpoint of improving the durability.

When the hydroxyl group-containing monomer is used as the monomer component, the copolymerization amount of the hydroxyl group-containing monomer is preferably 0.01 wt% or more, more preferably 0.03 wt% or more, still more preferably 0.05 wt% or more with respect to all monomer components for forming the (meth)acrylic polymer. The

upper limit of the copolymerization amount of the hydroxyl group-containing monomer is preferably 10 wt% or less, more preferably 5 wt% or less, still more preferably 2 wt% or less, particularly preferably 1 wt% or less.

The weight-average molecular weight Mw of the (meth)acrylic polymer is, for example, from $100\times10^4$ to $300\times10^4$, preferably from $120\times10^4$ to $200\times10^4$. In addition, the ratio "weight-average molecular weight (Mw)/number-average molecular weight (Mn)" that represents a molecular weight distribution is preferably from 1.8 to 10, more preferably from 1.8 to 7, still more preferably from 1.8 to 5. The weight-average molecular weight and the molecular weight distribution (Mw/Mn) are each determined from a value measured by gel permeation chromatography (GPC) and calculated in terms of polystyrene.

As the cross-linking agent, an isocyanate-based cross-linking agent and/or a peroxide-based cross-linking agent is preferably used, and the isocyanate-based cross-linking agent and the peroxide-based cross-linking agent are more preferably used in combination.

As the above-mentioned isocyanate-based cross-linking agent, a compound including at least two isocyanate groups (including an isocyanate regenerated functional group in which an isocyanate group is temporarily protected with, for example, a blocking agent or quantization) can be used. For example, an aliphatic polyisocyanate, an alicyclic polyisocyanate, and an aromatic polyisocyanate that can be used for a urethane formation reaction are used.

Examples of the aliphatic polyisocyanate include trimethylene diisocyanate, tetramethylene diisocyanate, hexamethylene diisocyanate, pentamethylene diisocyanate, 1,2-propylene diisocyanate, 1,3-butylene diisocyanate, dodecamethylene diisocyanate, and 2,4,4-trimethylhexamethylene diisocyanate. Examples of the alicyclic polyisocyanate include 1,3-cyclopentene diisocyanate, 1,3-cyclohexane diisocyanate, 1,4-cyclohexane diisocyanate, isophorone diisocyanate, hydrogenated diphenylmethane diisocyanate, hydrogenated xylylene diisocyanate, hydrogenated tolylene diisocyanate, and hydrogenated tetramethylxylylene diisocyanate. Examples of the aromatic polyisocyanate include phenylene diisocyanate, 2,4-tolylene diisocyanate, 2,6-tolylene diisocyanate, 2,2'-diphenylmethane diisocyanate, 4,4'-diphenylmethane diisocyanate, 4,4'-toluidine diisocyanate, 4,4'-diphenyl ether diisocyanate, 4,4'-diphenyl diisocyanate, 1,5-naphthalene diisocyanate, and xylylene diisocyanate.

In addition, examples of the isocyanate-based cross-linking agent include a multimer (e.g., a dimer, a trimer, or a pentamer) of the diisocyanate, and a urethane modified form, which is obtained through a reaction with a polyhydric alcohol such as trimethylolpropane, a urea modified form, a biuret modified form, an allophanate modified form, an isocyanurate modified form, and a carbodiimide modified form thereof.

Examples of commercially available products of the isocyanate-based cross-linking agent include products available under the product names "Millionate MT", "Millionate MTL", "Millionate MR-200", "Millionate MR-400", "CORONATE L", "Coronate HL", "CORONATE HX", and "CORONATE 2770" from Tosoh Corporation, and products available under the product names "TAKENATE D-110N", "TAKENATE D-120N", "TAKENATE D-140N", "TAKENATE D-160N", "TAKENATE D-165N", "TAKENATE D-170HN", "TAKENATE D-178N", "TAKENATE 500", and "TAKENATE 600" from Mitsui Chemicals, Inc.

In at least one embodiment of the present invention, as the isocyanate-based cross-linking agent, an aromatic polyisocyanate and an aromatic polyisocyanate-based compound that is a modified form thereof, and an aliphatic polyisocyanate and an aliphatic polyisocyanate-based compound that is a modified form thereof are preferably used. The aromatic polyisocyanate-based compound is suitably used because of the satisfactory balance between the cross-linking speed and pot life of the pressure-sensitive adhesive composition. Tolylene diisocyanate and a modified form thereof are each particularly preferably used as the aromatic polyisocyanate-based compound. In at least one embodiment of the present invention, a non-aromatic ring-based cross-linking agent is preferably used as the isocyanate-based cross-linking agent. The term "non-aromatic ring-based" as used herein means a compound free of an aromatic ring. Examples of the non-aromatic ring-based isocyanate-based cross-linking agent include an alicyclic isocyanate compound, an aliphatic isocyanate compound, and derivatives thereof. The non-aromatic ring-based isocyanate-based cross-linking agent may be an aliphatic isocyanate compound and a derivative thereof, or may be a hexamethylene diisocyanate (HDI)-based compound and a derivative thereof.

The above-mentioned peroxide-based cross-linking agent is not particularly limited as long as the peroxide-based cross-linking agent can generate radical-active species at the time of its heating or irradiation with light to progress the cross-linking of the above-mentioned (meth)acrylic polymer. For example, from the viewpoints of workability and stability, a peroxide-based cross-linking agent having a one-minute half-life temperature of from 80°C to 160°C is preferably used, and a peroxide-based cross-linking agent having a one-minute half-life temperature of from 90°C to 140°C is more preferably used.

The blending amount of the cross-linking agent is preferably from 0.01 part by weight to 3 parts by weight, more preferably from 0.02 part by weight to 2 parts by weight, still more preferably from 0.03 part by weight to 1 part by weight with respect to 100 parts by weight of the above-mentioned (meth)acrylic polymer. When an isocyanate-based cross-linking agent is blended as a cross-linking agent, the blending amount thereof is preferably from 0.01 part by weight to 2 parts by weight, more preferably from 0.02 part by weight to 1.5 parts by weight, still more preferably from 0.03 part by weight to 1 part by weight, and may be less than 1 part by weight, 0.8 part by weight or less, or 0.6 part by weight or less with respect to

100 parts by weight of the above-mentioned (meth)acrylic polymer. When a peroxide-based cross-linking agent is blended as a cross-linking agent, the blending amount thereof is preferably from 0.01 part by weight to 2 parts by weight, more preferably from 0.04 part by weight to 1.5 parts by weight, still more preferably from 0.05 part by weight to 1 part by weight with respect to 100 parts by weight of the above-mentioned (meth)acrylic polymer.

The above-mentioned pressure-sensitive adhesive composition can contain a silicon compound. The silicon compound is preferably one or more compounds selected from an alkoxysilane compound and an organopolysiloxane compound, and/or a hydrolytic condensate thereof, which each include an acidic group or an acid anhydride group derived from the acidic group in a molecule thereof and do not include a polyether group.

The above-mentioned acidic group is preferably a carboxyl group. The acidic group may be a group generated by hydrolysis of an acid anhydride group. Specific examples of the acid anhydride group include carboxylic acid anhydride groups, such as a succinic acid anhydride group, a phthalic acid anhydride group, and a maleic acid anhydride group, and the succinic acid anhydride group is preferred.

The above-mentioned predetermined alkoxysilane compound is represented, for example, by the general formula (I): $R^1R^2_aSi(OR^3)_{3-a}$.

In the general formula (I), $R^1$ represents an organic group having 1 to 20 carbon atoms including an acidic group or an acid anhydride group. This organic group may be a linear group, a branched group, or a cyclic group. In the general formula (I), $R^2$s each independently represent a monovalent hydrocarbon group having 1 to 20 carbon atoms that may be substituted with a hydrogen atom or a halogen atom. In the general formula (I), $R^3$s each independently represent an alkyl group having 1 to 10 carbon atoms, and "a" represents an integer of 0 or 1.

In the above-mentioned general formula (I), $R^1$ represents preferably an organic group represented by the following general formula (II) from the viewpoint of ease of availability.

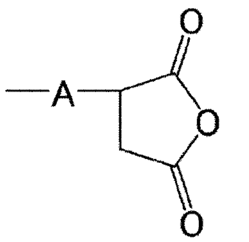

(II)

In the general formula (II), A represents a linear or branched alkylene group or alkenylene group having 2 to 10 carbon atoms, and preferably represents a linear or branched alkylene group having 2 to 6 carbon atoms.

Examples of the predetermined alkoxysilane compound include 2-trimethoxylylethylsuccinic anhydride (manufactured by Shin-Etsu Chemical Co., Ltd., product name: "X-12-967C"), 3-trimethoxysilylpropylsuccinic anhydride, 3-triethoxysilylpropylsuccinic anhydride, 3-methyldiethoxysilylpropylsuccinic anhydride, and 1-carboxy-3-triethoxysilylpropylsuccinic anhydride.

The predetermined organopolysiloxane compound is a compound having a siloxane bond, and includes, for example, a siloxane unit (U1) represented by the following formula (III). The predetermined organopolysiloxane compound may further include a siloxane unit (U2) represented by the following formula (IV) .

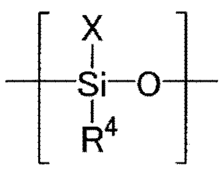

(III)

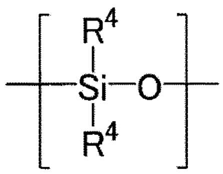

(IV)

In the formula (III), X represents an organic group including an acidic group or an acid anhydride group, preferably an organic group represented by the formula (II) . In the formulae (III) and (IV), $R^4$s each independently represent a hydrogen atom, an alkoxy group having 1 to 10 carbon atoms, or a monovalent hydrocarbon group having 1 to 20 carbon atoms that may be substituted with a halogen atom. The alkoxy group of $R^4$ is preferably a methoxy group or an ethoxy

group. The hydrocarbon group of $R^4$ is, for example, a methyl group.

The number of the siloxane units (U1) contained in the above-mentioned organopolysiloxane compound is not particularly limited, and is, for example, from 1 to 100, preferably from 1 to 50, more preferably from 1 to 20. The number of the siloxane units (U2) contained in the above-mentioned organopolysiloxane compound is not particularly limited, and is, for example, from 0 to 100, preferably from 0 to 50, more preferably from 0 to 20. It is preferred that the above-mentioned organopolysiloxane compound contain at least one siloxane unit (U2).

The above-mentioned organopolysiloxane compound may have a structure in which at least one siloxane unit (U1) is inserted between O-Si bonds contained in an alkoxysilane represented by the following formula (V) or a partial hydrolytic condensate thereof. Both the siloxane unit (U1) and the siloxane unit (U2) may be inserted between the O-Si bonds. The siloxane unit (U1) may be inserted between some of the O-Si bonds out of a plurality of O-Si bonds, and the siloxane unit (U2) may be inserted between other O-Si bonds.

$$R^5_nSi(OR^6)_{4-n} \cdots \qquad (V)$$

In the formula (V), $R^5$s each independently represent a monovalent hydrocarbon group having 1 to 20 carbon atoms that may be substituted with a hydrogen atom or a halogen atom. In the formula (V), $R^6$s each independently represent an alkyl group having 1 to 10 carbon atoms. In the formula (V), "n" represents 0 or 1.

Examples of the alkoxysilane represented by the formula (V) or the partial hydrolytic condensate thereof include tetramethoxysilane, methyltrimethoxysilane, tetraethoxysilane, methyltriethoxysilane, and a compound obtained by partially hydrolyzing and condensing one kind or two or more kinds of these alkoxysilanes.

The predetermined organopolysiloxane compound may be produced by, for example, a known production method described in Japanese Patent Application Laid-open No. 2013-129809 or Japanese Patent Application Laid-open No. 2013-129691.

The blending amount of the silicon compound is preferably 0.1 part by weight or more and 3.0 parts by weight or less, more preferably 0.2 part by weight or more and 2.0 parts by weight or less, still more preferably 0.2 part by weight or more and 1.0 part by weight or less, particularly preferably 0.4 part by weight or more and 0.6 part by weight or less with respect to 100 parts by weight of the above-mentioned (meth)acrylic polymer.

The above-mentioned pressure-sensitive adhesive composition can contain a reactive functional group-containing silane coupling agent. In the reactive functional group-containing silane coupling agent, a reactive functional group may be a functional group except an acid anhydride group. The functional group except the acid anhydride group is preferably one or more functional groups selected from an epoxy group, a mercapto group, an amino group, an isocyanate group, an isocyanurate group, a vinyl group, a styryl group, an acetoacetyl group, a ureide group, a thiourea group, a (meth)acrylic group, and a heterocyclic group.

Examples of the reactive functional group-containing silane coupling agent include: epoxy group-containing silane coupling agents, such as 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane; mercapto group-containing silane coupling agents, such as 3-mercaptopropylmethyldimethoxysilane and 3-mercaptopropyltrimethoxysilane; amino group-containing silane coupling agents, such as 3-aminopropyltrimethoxysilane, N-2-(aminoethyl)-3-aminopropylmethyldimethoxysilane, 3-triethoxysilyl-N-(1,3-dimethylbutylidene)propylamine, and N-phenyl-γ-aminopropyltrimethoxysilane; isocyanate group-containing silane coupling agents such as 3-isocyanatopropyltriethoxysilane; vinyl group-containing silane coupling agents, such as vinyltrimethoxysilane and vinyltriethoxysilane; styryl group-containing silane coupling agents such as p-styryltrimethoxysilane; (meth)acrylic group-containing silane coupling agents, such as 3-acryloxypropyltrimethoxysilane and 3-methacryloxypropyltriethoxysilane. Of those, an epoxy group-containing silane coupling agent and a mercapto group-containing silane coupling agent are preferred.

An oligomer-type silane coupling agent having a plurality of alkoxysilyl groups in a molecule thereof may also be used as the reactive functional group-containing silane coupling agent. Specific examples thereof include epoxy group-containing oligomer-type silane coupling agents available under the product names "X-41-1053", "X-41-1059A", "X-41-1056", and "X-40-2651", and mercapto group-containing oligomer-type silane coupling agents available under the product names "X-41-1818", "X-41-1810", and "X-41-1805" from Shin-Etsu Chemical Co., Ltd. The oligomer-type silane coupling agent may be effective in improving the durability because the oligomer-type silane coupling agent is hardly volatilized and includes a plurality of alkoxysilyl groups.

When a reactive functional group-containing silane coupling agent is blended into the above-mentioned pressure-sensitive adhesive composition, the blending amount of the reactive functional group-containing silane coupling agent is preferably 0.001 part by weight or more and 5 parts by weight or less, more preferably 0.01 part by weight or more and 1 part by weight or less, still more preferably 0.05 part by weight or more and 0.6 part by weight or less with respect to 100 parts by weight of the above-mentioned (meth)acrylic polymer. In addition, the weight ratio of the above-mentioned silicon compound to the reactive functional group-containing silane coupling agent (blending amount of the silicon compound/blending amount of the reactive functional group-containing silane coupling agent) is preferably 0.1 or more

and 50 or less, more preferably 0.5 or more and 15 or less, still more preferably 1 or more and 5 or less, for example, from the viewpoint of improving the durability.

The above-mentioned pressure-sensitive adhesive composition can contain a conductive agent. Any appropriate conductive agent may be used as the conductive agent. An organic cationic conductive agent is preferably used as the conductive agent. The organic cationic conductive agent may be typically an organic cationic salt. In the organic cationic salt, a cationic portion (cationic component) may have an organic structure. An anionic portion (anionic component) of the organic cationic salt may have an organic structure or an inorganic structure. The organic cationic salt may be an ionic solid having a melting point of 40°C or more.

An example of the cation is an organic onium having an organic group. Examples of the onium in the organic onium include a nitrogen-containing onium, a sulfur-containing onium, and a phosphorus-containing onium. Of those, a nitrogen-containing onium and a sulfur-containing onium are preferred. Examples of the nitrogen-containing onium include an ammonium cation, a piperidinium cation, a pyrrolidinium cation, a pyridinium cation, a cation having a pyrroline skeleton, a cation having a pyrrole skeleton, an imidazolium cation, a tetrahydropyrimidinium cation, a dihydropyrimidinium cation, a pyrazolium cation, and a pyrazolinium cation. An example of the sulfur-containing onium is a sulfonium cation. An example of the phosphorus-containing onium is a phosphonium cation. Examples of the organic group in the organic onium include an alkyl group, an alkoxyl group, and an alkenyl group. Preferred specific examples of the organic onium include a tetraalkylammonium cation (e.g., a tributylmethylammonium cation), an alkylpiperidinium cation, and an alkylpyrrolidinium cation.

Examples of the anion include $Cl^-$, $Br^-$, $I^-$, $AlCl_4^-$, $Al_2Cl_7^-$, $BF_4^-$, $PF_6^-$, $ClO_4^-$, $NO_3^-$, $CH_3COO^-$, $CF_3COO^-$, $CH_3SO_3^-$, $CF_3SO_3^-$, $(CF_3SO_2)_3C^-$, $AsF_6^-$, $SbF_6^-$, $NbF_6^-$, $TaF_6^-$, $(CN)_2N^-$, $C_4F_9SO_3^-$, $C_3F_7COO^-$, $(CF_3SO_2)(CF_3CO)N^-$, $-O_3S(CF_2)_3SO_3^-$, and anions represented by the following general formulae (a) to (d).

(a) $(C_nF_{2n+1}SO_2)_2N^-$ ("n" represents an integer of from 1 to 10)
(b) $CF_2(C_mF_{2m}SO_2)_2N^-$ ("m" represents an integer of from 1 to 10)
(c) $-O_3S(CF_2)_lSO_3^-$ ("l" represents an integer of from 1 to 10)
(d) $(C_pF_{2p+1}SO_2)N^-(C_qF_{2q+1}SO_2)$ ("p" and "q" each independently represent an integer of from 1 to 10)

Specific examples of the organic cation-based conductive agent include 1-ethyl-3-methylimidazolium bis(fluorosulfonyl)imide (EMI-FSI) and trimethylbutylammonium bis(trifluoromethanesulfonyl)imide.

The blending amount of the organic cation-based conductive agent is, for example, 0.1 part by weight or more, and may be 0.3 part by weight or more, 0.5 part by weight or more, 0.7 part by weight or more, 0.9 part by weight or more, 1 part by weight or more, 3 parts by weight or more, 5 parts by weight or more, and 7 parts by weight or more with respect to 100 parts by weight of the (meth) acrylic polymer. The upper limit of the blending amount is, for example, 20 parts by weight or less, and may be 15 parts by weight or less, 12 parts by weight or less, 10 parts by weight or less, 8 parts by weight or less, 5 parts by weight or less, 4 parts by weight or less, 3 parts by weight or less, 2 parts by weight or less, and 1.5 parts by weight or less with respect to 100 parts by weight of the (meth)acrylic polymer.

<Support>

The above-mentioned support is, for example, arranged so as to be adjacent to the pressure-sensitive adhesive layer that can function as a light diffusion layer. As the support, a support having appropriate mechanical strength is used. As such support, for example, a film (laminated film) having the above-mentioned hard coat layer formed thereon is used. The thickness of the hard coat layer is preferably from 1 um to 20 μm, more preferably from 3 um to 15 μm, still more preferably from 5 um to 12 um. Examples of the material serving as a main component of the film for forming the support include: cellulose-based resins such as triacetyl cellulose (TAC); polyester-based resins; polyvinyl alcohol-based resins; polycarbonate-based resins; polyamide-based resins; polyimide-based resins; polyethersulfone-based resins; polysulfone-based resins; polystyrene-based resins; cycloolefin-based resins such as polynorbornene; polyolefin-based resins; (meth)acrylic resins; and acetate-based resins. The thickness of the support (film on which the hard coat layer has been formed) is preferably from 10 um to 80 um, more preferably from 15 um to 70 μm, still more preferably from 20 um to 50 μm.

[Display Apparatus]

The above-mentioned optical laminate may be used in a display apparatus, and a display apparatus according to at least one embodiment of the present invention includes the above-mentioned optical laminate. FIG. **3** is a schematic sectional view for illustrating the outline of a liquid crystal display apparatus according to at least one embodiment of the present invention. Specifically, FIG. **3** is a schematic sectional view for illustrating a display panel portion included in the liquid crystal display apparatus according to at least one embodiment of the present invention.

A panel portion **1** of the liquid crystal display apparatus includes a first display panel **100,** a second display panel

**200** arranged at a position closer to an observer as compared to the first display panel **100,** the optical laminate **60** arranged between the first display panel **100** and the second display panel **200,** and a backlight **300** that irradiates a plurality of display panels with light from a back surface side. The optical laminate **60** is bonded to the first display panel **100** via the first pressure-sensitive adhesive layer **41,** and is bonded to the second display panel **200** via the third pressure-sensitive adhesive layer **43.** In FIG. **3,** the upper side corresponds to the observer side, and although not shown, a transparent plate may be arranged on the observer side of the first display panel **100.**

The first display panel **100** includes a first liquid crystal cell **101** and a first polarizing plate **102** arranged on the backlight **300** side of the first liquid crystal cell **101.** The second display panel **200** includes a second liquid crystal cell **201** and a second polarizing plate **202** arranged on the observer side of the second liquid crystal cell **201.** The first liquid crystal cell **101** and the second liquid crystal cell **201** each include a thin-film transistor substrate (TFT substrate), a color filter substrate (CF substrate), and a liquid crystal layer arranged between the TFT substrate and the CF substrate, which are not shown. Any appropriate drive system may be adopted as a drive system for each of the first liquid crystal cell **101** and the second liquid crystal cell **201.**

As described above, the optical laminate **60** may include a light diffusion layer, and hence the occurrence of moire can be suppressed in the liquid crystal display apparatus according to at least one embodiment of the present invention. For example, the occurrence of moire caused by the black matrix pattern of the CF substrate can be suppressed between the first liquid crystal cell **101** and the second liquid crystal cell **201.**

For example, when the optical laminate **60** is exposed to a high-temperature environment under a state in which moisture is present in the polarizing plate **30,** an acid present in the pressure-sensitive adhesive layer may migrate to the polarizing film **10** and may act as an acid catalyst for polyene formation caused by dehydration of polyvinyl alcohol in the polarizing film **10.** It is conceived that, in a configuration in which the display panels **100** and **200** are arranged on both sides of the polarizing plate **30,** moisture in the polarizing plate **30** hardly escapes, and hence the polyene formation is easily accelerated. Thus, even under an environment in which the polyene formation is easily accelerated, the polyene formation can be suppressed by the presence of the predetermined compound in the polarizing film **10.** As a result, it is conceived that a decrease in single layer transmittance of the polarizing film **10** can be suppressed. The influence of the acid present in the pressure-sensitive adhesive layer may be increased when the thickness of the pressure-sensitive adhesive layer is increased.

In the optical laminate **60,** the first pressure-sensitive adhesive layer **41** bonded to the first display panel **100** arranged on the backlight **300** side is liable to be affected by the heat and/or light from the backlight **300.** In addition, in the configuration in which the display panels **100** and **200** are arranged on both sides of the optical laminate **60,** a radical is liable to be generated in an end portion including an end surface of the first pressure-sensitive adhesive layer **41** that is in contact with air (oxygen), and for example, yellowing may occur. The occurrence of the above-mentioned yellowing can be suppressed, for example, by forming the first pressure-sensitive adhesive layer **41,** which is liable to be affected by the heat and/or light from the backlight **300,** from the above-mentioned pressure-sensitive adhesive composition.

In at least one embodiment of the present invention, the first pressure-sensitive adhesive layer **41** that is liable to be affected by the backlight **300** is substantially free of fine particles. According to this form, the first pressure-sensitive adhesive layer **41** can have excellent pressure-sensitive adhesive characteristics with respect to the first display panel **100.**

The optical laminate **60** includes the pressure-sensitive adhesive layer with a high haze (e.g., a haze of 66% or more), and hence the light quantity of the backlight **300** may be increased from the viewpoint of ensuring brightness. In this case, the polarizing plate **30** and/or the first pressure-sensitive adhesive layer **41** is further affected by the heat and/or light from the backlight **300,** and hence the above-mentioned problems of polyene formation and/or yellowing are liable to occur.

## Examples

The present invention is specifically described below by way of Examples, but the present invention is not limited to these Examples. A thickness, a haze, an iodine concentration, and a weight-average molecular weight (Mw) are values measured by the following measurement methods. In addition, "part(s)" and "%" are by weight unless otherwise specified.

<Thickness>

A thickness of 10 um or less was measured with a scanning electron microscope (manufactured by JEOL Ltd., product name: "JSM-7100F"). A thickness of more than 10 um was measured with a digital micrometer (manufactured by Anritsu Corporation, product name: "KC-351C").

<Haze>

A haze was measured with a haze meter (manufactured by Murakami Color Research Laboratory Co., Ltd., product name: "HN-150") in conformity with JIS K 7136.

<Iodine Concentration>

Measurement was performed in a polarizing film at a measurement diameter of φ20 mm with an X-ray fluorescence analyzer (manufactured by Rigaku Corporation, "ZSX-PRIMUS IV"), and an iodine concentration (wt%) was determined by using the following equation. The following coefficients for calculating the iodine concentration vary, for example, depending on the measurement device, but can be determined through use of an appropriate calibration curve.

Iodine concentration (wt%)=14.474×(fluorescent X-ray intensity)/(film thickness) (kcps/um)

<Weight-average Molecular Weight (Mw)>

The weight-average molecular weight (Mw) was measured by gel permeation chromatography (GPC). The ratio Mw/Mn was also measured in the same manner.

·Analysis apparatus: HLC-8120GPC manufactured by Tosoh Corporation
·Column: manufactured by Tosoh Corporation, G7000$H_{XL}$+$GMH_{XL}$+$GMH_{XL}$
·Column size: 7.8 mmφ×30 cm each, 90 cm in total
·Column temperature: 40°C
·Flow rate: 0.8 mL/min
·Injection amount: 100 μL
·Eluent: tetrahydrofuran
·Detector: differential refractometer (RI)
·Reference sample: polystyrene

[Example 1]

(Production of Polarizing Film 1)

A polyvinyl alcohol film having an average polymerization degree of 2,400, a saponification degree of 99.9 mol%, and a thickness of 45 um was prepared.

The polyvinyl alcohol film was stretched at a ratio of 2.2 times in a conveyance direction while being swollen by being immersed in a swelling bath (water bath) at 20°C for 30 seconds between rolls having different peripheral speed ratios (swelling step). Subsequently, the film was stretched at a ratio of 3.3 times in the conveyance direction based on the original polyvinyl alcohol film (polyvinyl alcohol film that was not stretched in the conveyance direction at all) while being dyed by being immersed in a dyeing bath (iodine aqueous solution obtained by blending iodine and potassium iodide in a weight ratio of 1:7 with respect to 100 parts by weight of water) at 30°C with the concentration being adjusted so that the iodine concentration in a polarizing film to be finally obtained reached 4.47 wt% (dyeing step) .

Then, the dyed polyvinyl alcohol film was stretched at a ratio of 3.6 times in the conveyance direction based on the original polyvinyl alcohol film while being immersed in a cross-linking bath (aqueous solution having a boric acid concentration of 3.0 wt% and a potassium iodide concentration of 3.0 wt%) at 40°C for 28 seconds (cross-linking step).

Further, the resultant polyvinyl alcohol film was stretched at a ratio of 6.0 times in the conveyance direction based on the original polyvinyl alcohol film while being immersed in a stretching bath (aqueous solution having a boric acid concentration of 4.0 wt% and a potassium iodide concentration of 5.0 wt%) at 61°C for 60 seconds (stretching step) . Then, the film was immersed in a washing bath (aqueous solution having a potassium iodide concentration of 2.0 wt% and a concentration of a compound represented by the following general formula (9) of 0.4 wt%) at 35°C for 10 seconds (washing step). The washed polyvinyl alcohol film was dried at 40°C for 30 seconds to produce a polarizing film having a thickness of 18 μm and an iodine concentration of 4.47 wt%. The compound represented by the following general formula (9) is a compound that is dissolved in an amount of 1 part by weight or more with respect to 100 parts by weight of water at 25°C.

About 20 mg of the resultant polarizing film was collected, quantified, and dissolved by heating in 1 mL of water. After that, the resultant was diluted with 4.5 mL of methanol. The resultant extract liquid was filtered through a membrane filter, and the filtrate was measured for a content of the compound represented by the following general formula (9) in the polarizing film with a HPLC apparatus (Waters Corporation, "ACQUITY UPLC H-class Bio"). The content was 0.28 wt%.

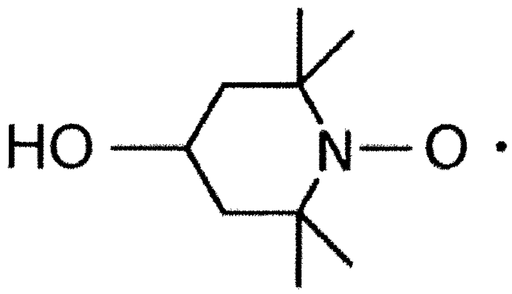

・・・(9)

(Production of Polarizing Plate)

A 30-micrometer thick acrylic film formed of an acrylic polymer having a lactone ring structure was bonded to one surface (first main surface) of the above-mentioned polarizing film via a polyvinyl alcohol-based adhesive.

Next, a HC-TAC film having a thickness of 49 μm was bonded to the other surface (second main surface) of the polarizing film via a polyvinyl alcohol-based adhesive. The HC-TAC film having a thickness of 49 μm is a laminated film in which a hard coat (HC) layer having a thickness of 9 μm is formed on a triacetyl cellulose (TAC) film (manufactured by Konica Minolta, Inc., "KC4UY") having a thickness of 40 μm. The HC-TAC film was bonded so that the TAC film of the laminated film was on the polarizing film side. Thus, a laminate was obtained.

The resultant laminate was heated and dried in an oven set at 70°C for 5 minutes to produce a polarizing plate.

(Preparation of Acrylic Pressure-sensitive Adhesive Composition 1)

A monomer mixture containing 76.9 parts by weight of butyl acrylate, 18 parts by weight of benzyl acrylate, 5 parts by weight of acrylic acid, and 0.1 part by weight of 4-hydroxybutyl acrylate was loaded into a four-necked flask including a stirring blade, a temperature gauge, a nitrogen gas-introducing tube, and a condenser. Further, 0.1 part by weight of 2,2'-azobisisobutyronitrile serving as a polymerization initiator was loaded together with 100 parts by weight of ethyl acetate with respect to 100 parts by weight of the monomer mixture (solid content). While the mixture was gently stirred, a nitrogen gas was introduced to purge the inside of the flask with nitrogen. After that, the temperature of the liquid in the flask was kept at 55°C, and a polymerization reaction was performed for 8 hours to prepare a solution of an acrylic polymer having a weight-average molecular weight (Mw) of 1,950,000 and a ratio Mw/Mn of 3.9.

0.4 Part by weight of an isocyanate-based cross-linking agent (trimethylolpropane/tolylene diisocyanate adduct, manufactured by Tosoh Corporation, "CORONATE L"), 0.1 part by weight of a peroxide-based cross-linking agent (manufactured by Nippon Oil & Fats Co., Ltd., "NYPER BMT"), 0.2 part by weight of a silane coupling agent (manufactured by Shin-Etsu Chemical Co., Ltd., "X-41-1056"), and 0.6 part by weight of the following organopolysiloxane compound were blended with respect to 100 parts by weight of the solid content of the resultant acrylic polymer solution to prepare an acrylic pressure-sensitive adhesive composition 1.

(Production of Organopolysiloxane Compound)

An organopolysiloxane compound was produced in accordance with the method described in Example 1 of Japanese Patent Application Laid-open No. 2013-129809. The organopolysiloxane compound included the above-mentioned siloxane units (U1) and (U2). In the siloxane unit (U1), X was a propylsuccinic acid anhydride group and $R^4$ was a methyl group. In the siloxane unit (U2), two $R^4$s were both methoxy groups. The content ratio of the siloxane unit (U1) in the produced organopolysiloxane compound was 27 mol%, and the content ratio of the siloxane unit (U2) therein was 73 mol%. In addition, the weight-average molecular weight of the compound was about 1,000.

(Formation of First Pressure-sensitive Adhesive Layer)

The above-mentioned acrylic pressure-sensitive adhesive composition 1 was applied to a release liner (polyethylene terephthalate film treated with a silicone-based release agent, thickness: 38 μm, manufactured by Mitsubishi Chemical Polyester Film Co., Ltd., "MRF38") so that the thickness of the pressure-sensitive adhesive layer after drying was 20 μm. The resultant was dried at 155°C for 1 minute to form a first pressure-sensitive adhesive layer on the release liner.

(Production of Polarizing Plate with Pressure-sensitive Adhesive Layer)

The above-mentioned first pressure-sensitive adhesive layer was bonded to the surface on the acrylic film side of the above-mentioned polarizing plate to provide a polarizing plate with a pressure-sensitive adhesive layer.

(Preparation of Composition for forming Light Diffusion Layer)

100 Parts by weight of butyl acrylate, 5 parts by weight of acrylic acid, and 0.1 part by weight of hydroxyethyl acrylate were subjected to solution polymerization to provide an acrylic polymer having a weight-average molecular weight (Mw) of 2,000,000.

100 Parts by weight of the resultant acrylic polymer, 0.6 part by weight of an isocyanate-based cross-linking agent (trimethylolpropane/tolylene diisocyanate adduct, manufactured by Tosoh Corporation, "CORONATE L"), 0.1 part by weight of a silane coupling agent (manufactured by Shin-Etsu Chemical Co., Ltd., "KBM-403"), and 7 parts by weight of spherical fine particles (silicone resin having a refractive index of 1.42 and an average particle diameter of 4.5 μm, manufactured by Momentive Performance Materials Japan, Inc., "TOSPEARL 145") were added to toluene so as to achieve a solid content of 10 wt%, followed by the stirring of the mixture with a disperser for 15 minutes to disperse the fine particles. Thus, a composition for forming a light diffusion layer was prepared.

(Formation of Second Pressure-sensitive Adhesive Layer)

The resultant composition for forming a light diffusion layer was applied to the surface on the polarizing plate side of the above-mentioned polarizing plate with a pressure-sensitive adhesive layer through use of a wire bar so that the thickness after drying was 23 um, followed by drying. Thus, a second pressure-sensitive adhesive layer having a haze of 85% was formed.

(Production of Optical Laminate)

Next, a HC-TAC film having a thickness of 49 μm was bonded to the second pressure-sensitive adhesive layer of the polarizing plate with a pressure-sensitive adhesive layer, and a pressure-sensitive adhesive layer having a thickness of 250 μm was further formed on the surface of the HC-TAC film to produce an optical laminate.

[Example 2]

An optical laminate was produced in the same manner as in Example 1 except that the blending amount of the spherical fine particles was set to 5 parts by weight in the preparation of the composition for forming a light diffusion layer, and a second pressure-sensitive adhesive layer having a haze of 80% was formed.

[Example 3]

An optical laminate was produced in the same manner as in Example 1 except that the blending amount of the spherical fine particles was set to 4 parts by weight in the preparation of the composition for forming a light diffusion layer, and a second pressure-sensitive adhesive layer having a haze of 75% was formed.

[Example 4]

An optical laminate was produced in the same manner as in Example 1 except that the first pressure-sensitive adhesive layer was formed through use of an acrylic pressure-sensitive adhesive composition 2 described below.

(Preparation of Acrylic Pressure-sensitive Adhesive Composition 2)

A monomer mixture containing 77.95 parts by weight of butyl acrylate, 16 parts by weight of phenoxyethyl acrylate, 3 parts by weight of acrylic acid, 1 part by weight of N-vinyl-2-pyrrolidone, and 0.05 part by weight of 4-hydroxybutyl acrylate was loaded into a four-necked flask including a stirring blade, a temperature gauge, a nitrogen gas-introducing tube, and a condenser. Further, 0.1 part by weight of 2,2'-azobisisobutyronitrile serving as a polymerization initiator was loaded together with 100 parts by weight of ethyl acetate with respect to 100 parts by weight of the monomer mixture. While the mixture was gently stirred, a nitrogen gas was introduced to purge the inside of the flask with nitrogen. After that, the temperature of the liquid in the flask was kept at 55°C, and a polymerization reaction was performed for 6 hours to prepare a solution of an acrylic polymer having a weight-average molecular weight (Mw) of 2,500,000 and a ratio

Mw/Mn of 3.0.

0.5 Part by weight of a non-aromatic ring-based isocyanate-based cross-linking agent (allophanate form obtained by an addition reaction of hexamethylene diisocyanate with acrylic polyol, manufactured by Tosoh Corporation, "CORONATE 2770"), 0.2 part by weight of a peroxide-based cross-linking agent (manufactured by Nippon Oil & Fats Co., Ltd., "NYPER BMT"), and 1 part by weight of 1-ethyl-3-methylimidazolium bis(fluorosulfonyl)imide (EMI-FSI) were blended with respect to 100 parts by weight of the solid content of the resultant acrylic polymer solution to prepare an acrylic pressure-sensitive adhesive composition 2.

[Example 5]

An optical laminate was produced in the same manner as in Example 2 except that the first pressure-sensitive adhesive layer was formed through use of the above-mentioned acrylic pressure-sensitive adhesive composition 2.

[Example 6]

An optical laminate was produced in the same manner as in Example 3 except that the first pressure-sensitive adhesive layer was formed through use of the above-mentioned acrylic pressure-sensitive adhesive composition 2.

[Example 7]

An optical laminate was produced in the same manner as in Example 2 except that the first pressure-sensitive adhesive layer was formed through use of an acrylic pressure-sensitive adhesive composition 3 described below.

(Preparation of Acrylic Pressure-sensitive Adhesive Composition 3)

A monomer mixture containing 77.95 parts by weight of butyl acrylate, 16 parts by weight of phenoxyethyl acrylate, 3 parts by weight of acrylic acid, 1 part by weight of N-vinyl-2-pyrrolidone, and 0.05 part by weight of 4-hydroxybutyl acrylate was loaded into a four-necked flask including a stirring blade, a temperature gauge, a nitrogen gas-introducing tube, and a condenser. Further, 0.1 part by weight of 2,2'-azobisisobutyronitrile serving as a polymerization initiator was loaded together with 100 parts by weight of ethyl acetate with respect to 100 parts by weight of the monomer mixture. While the mixture was gently stirred, a nitrogen gas was introduced to purge the inside of the flask with nitrogen. After that, the temperature of the liquid in the flask was kept at 55°C, and a polymerization reaction was performed for 6 hours to prepare a solution of an acrylic polymer having a weight-average molecular weight (Mw) of 2,500,000 and a ratio Mw/Mn of 3.0.

1 Part by weight of an isocyanate-based cross-linking agent (trimethylolpropane/tolylene diisocyanate adduct, manufactured by Tosoh Corporation, "CORONATE L"), 0.2 part by weight of a peroxide-based cross-linking agent (manufactured by Nippon Oil & Fats Co., Ltd., "NYPER BMT"), 0.5 part by weight of bis(trifluoromethanesulfonyl) imidolithium, 0.05 part by weight of a silane coupling agent (manufactured by Shin-Etsu Chemical Co., Ltd., "X-41-1056"), 0.4 part by weight of a polyether compound (manufactured by Kaneka Corporation, "Cyril SAT10"), and 0.4 part by weight of the above-mentioned organopolysiloxane compound were blended with respect to 100 parts by weight of the solid content of the resultant acrylic polymer solution to prepare an acrylic pressure-sensitive adhesive composition 3.

[Comparative Example 1]

An optical laminate was produced in the same manner as in Example 1 except that the blending amount of the spherical fine particles was set to 2 parts by weight in the preparation of the composition for forming a light diffusion layer, and a second pressure-sensitive adhesive layer having a haze of 55% was formed.

[Comparative Example 2]

An optical laminate was produced in the same manner as in Example 2 except that the polarizing plate was produced through use of a polarizing film 2 described below.

(Production of Polarizing Film 2)

A polyvinyl alcohol film having an average polymerization degree of 2,400, a saponification degree of 99.9 mol%, and a thickness of 45 um was prepared.

The polyvinyl alcohol film was stretched at a ratio of 2.4 times in a conveyance direction while being swollen by being immersed in a swelling bath (water bath) at 28°C for 30 seconds between rolls having different peripheral speed ratios (swelling step). Subsequently, the film was stretched at a ratio of 3.7 times in the conveyance direction based on the original polyvinyl alcohol film (polyvinyl alcohol film that was not stretched in the conveyance direction at all) while being dyed by being immersed in a dyeing bath (aqueous solution having an iodine concentration of 0.03 wt% and a potassium iodide concentration of 0.3 wt%) at 25°C for 45 seconds (dyeing step).

Then, the dyed polyvinyl alcohol film was stretched up to a ratio of 4.2 times in the conveyance direction based on the original polyvinyl alcohol film while being immersed in a cross-linking bath (aqueous solution having a boric acid concentration of 3.0 wt%, a potassium iodide concentration of 3.0 wt%, and a zinc sulfate concentration of 3.6 wt% (zinc ion concentration of 1.5 wt%)) at 40°C for 20 seconds (cross-linking step).

Further, the resultant polyvinyl alcohol film was stretched up to a ratio of 6.0 times in the conveyance direction based on the original polyvinyl alcohol film while being immersed in a stretching bath (aqueous solution having a boric acid concentration of 4.0 wt%, a potassium iodide concentration of 5.0 wt%, and a zinc sulfate concentration of 5.0 wt% (zinc ion concentration of 2.0 wt%)) at 65°C for 50 seconds (stretching step). Then, the film was immersed in a washing bath (aqueous solution having a potassium iodide concentration of 2.5 wt%) at 27°C for 5 seconds (washing step).

The washed polyvinyl alcohol film was dried at 25°C for 2 minutes to produce a polarizing film having a thickness of 18 μm.

[Comparative Example 3]

An optical laminate was produced in the same manner as in Example 5 except that the polarizing plate was produced through use of the polarizing film 2.

Each of the optical laminates of Examples and Comparative Examples was subjected to the following evaluations. The evaluation results are summarized in Table 1.

<Evaluation>

1. Moire

In-vehicle in-plane switching (IPS) type panels (a first liquid crystal display panel and a second liquid crystal display panel) and a backlight were prepared. Then, as illustrated in FIG. 3, the first pressure-sensitive adhesive layer of the resultant optical laminate was bonded to a liquid crystal cell of the first liquid crystal display panel, and the pressure-sensitive adhesive layer having a thickness of 250 um of the optical laminate was bonded to a liquid crystal cell of the second liquid crystal display panel. After that, the presence or absence of a moire phenomenon (occurrence of rainbow banding) was visually observed from the second liquid crystal display panel side by lighting up the backlight from the first liquid crystal display panel side.

(Evaluation Criteria)

Satisfactory: Moire (rainbow banding) cannot be observed.
Unsatisfactory: Moire (rainbow banding) is observed.

2. Appearance 1

An alkali-free glass plate 1 having a thickness of 0.7 mm was bonded to the pressure-sensitive adhesive layer having a thickness of 250 μm of the optical laminate. Then, the release liner used for forming the first pressure-sensitive adhesive layer was peeled from the first pressure-sensitive adhesive layer, and an alkali-free glass plate 2 having a thickness of 0.7 mm was bonded to the peeled surface to provide a sample for evaluation. The sample for evaluation was left under an environment at a temperature of 95°C for 1,000 hours, and then, the appearance of the optical laminate after heating was visually observed under irradiation with fluorescent light.

(Evaluation Criteria)

Satisfactory: No significant change is observed in the appearance of the optical laminate as compared to a separately prepared sample for evaluation (not left under an environment at a temperature of 95°C).

Unsatisfactory: A significant change in color (discoloration to brown or black) is observed in the appearance of the

optical laminate as compared to the separately prepared sample for evaluation (not left under an environment at a temperature of 95°C).

3. Appearance 2

The above-mentioned sample for evaluation was left under a heating environment at a temperature of 95°C for 500 hours. After the sample for evaluation was left, the sample for evaluation was irradiated with light from the glass plate 2 side of the sample for evaluation, and the appearance of the optical laminate after irradiation was visually observed. For the evaluation, a backlight having an emission region capable of emitting light equivalent to that of a CIE standard light source D65 at a luminous intensity of 15,000 candela was used.

(Evaluation Criteria)

Satisfactory: No change is observed in the appearance of the optical laminate.
Unsatisfactory: No change is observed in the appearance of the optical laminate, but the end portion including the end surface of the pressure-sensitive adhesive layer is colored (yellowed).

Table 1

| | Moire | Appearance 1 | Appearance 2 |
|---|---|---|---|
| Example 1 | Satisfactory | Satisfactory | Satisfactory |
| Example 2 | Satisfactory | Satisfactory | Satisfactory |
| Example 3 | Satisfactory | Satisfactory | Satisfactory |
| Example 4 | Satisfactory | Satisfactory | Satisfactory |
| Example 5 | Satisfactory | Satisfactory | Satisfactory |
| Example 6 | Satisfactory | Satisfactory | Satisfactory |
| Example 7 | Satisfactory | Satisfactory | Unsatisfactory |
| Comparative Example 1 | Unsatisfactory | Satisfactory | Satisfactory |
| Comparative Example 2 | Satisfactory | Unsatisfactory | Satisfactory |
| Comparative Example 3 | Satisfactory | Unsatisfactory | Satisfactory |
| Reference Example 1 | Satisfactory | Satisfactory | Satisfactory |
| Reference Example 2 | Satisfactory | Satisfactory | Satisfactory |
| Reference Example 3 | Satisfactory | Satisfactory | Satisfactory |

In each of Comparative Examples 2 and 3, discoloration was observed in a center portion of the display panel. In Example 7, yellowing was observed in the end portion of the first pressure-sensitive adhesive layer.
In Reference Examples 1 and 2 in Table 1, samples for evaluation were produced in the same manner as that described above except that the alkali-free glass plates 1 were not bonded to the optical laminates of Comparative Examples 2 and 3, respectively. The samples were subjected to the above-mentioned evaluations. In addition, in Reference Example 3 in Table 1, a sample for evaluation was produced in the same manner as that described above except that the alkali-free glass plate 1 was not bonded to the optical laminate of Example 7. The sample was subjected to the above-mentioned evaluations.
The present invention is not limited to the above-mentioned embodiments, and various modifications may be made thereto. For example, the configurations described in the above-mentioned embodiments may each be replaced by substantially the same configuration, a configuration having the same action and effect, or a configuration that can achieve the same object.

Industrial Applicability

The optical laminate according to at least one embodiment of the present invention is suitably used, for example, in a display apparatus having a configuration in which a plurality of display panels are overlapped each other.

Reference Signs List

**1** panel portion of the display apparatus
**10** polarizing film
**21** first protective layer
**22** second protective layer
**30** polarizing plate
**41** first pressure-sensitive adhesive layer
**42** second pressure-sensitive adhesive layer
**43** third pressure-sensitive adhesive layer
**50** support
**60** optical laminate
**61** optical laminate
**100** first display panel
**200** second display panel

## Claims

1. An optical laminate, comprising:

   a polarizing plate including a polarizing film having a first main surface and a second main surface opposed to each other;
   a first pressure-sensitive adhesive layer arranged on a first main surface side of the polarizing film; and
   a second pressure-sensitive adhesive layer arranged on a second main surface side of the polarizing film,
   wherein at least one of the first pressure-sensitive adhesive layer or the second pressure-sensitive adhesive layer has a haze of 66% or more, and
   wherein the polarizing film includes a polyvinyl alcohol-based film containing iodine and contains a compound including one of a nitroxy radical or a nitroxide group.

2. The optical laminate according to claim 1, wherein the second pressure-sensitive adhesive layer has a haze of 66% or more.

3. The optical laminate according to claim 2, further comprising a third pressure-sensitive adhesive layer arranged on the second main surface side of the polarizing film.

4. The optical laminate according to claim 2, further comprising a support arranged on the second main surface side of the polarizing film.

5. The optical laminate according to claim 1, wherein the polarizing film contains the compound including one of a nitroxy radical or a nitroxide group in a content of 20 wt% or less.

6. The optical laminate according to claim 1, wherein the polarizing film contains the iodine in a content of 1 wt% or more and 15 wt% or less.

7. The optical laminate according to claim 1,

   wherein the first pressure-sensitive adhesive layer is formed of a pressure-sensitive adhesive composition containing a (meth)acrylic polymer and a cross-linking agent,
   wherein the cross-linking agent contains an isocyanate-based cross-linking agent, and
   wherein a content of the isocyanate-based cross-linking agent is less than 1 part by weight with respect to 100 parts by weight of the (meth)acrylic polymer.

8. The optical laminate according to claim 7, wherein the isocyanate-based cross-linking agent is a non-aromatic system.

**9.** A display apparatus, in which a plurality of display panels each including a liquid crystal cell are arranged so as to overlap each other, and which is configured to display an image on each of the display panels,
the display apparatus comprising:

a first display panel;
a second display panel arranged at a position closer to an observer as compared to the first display panel; and
the optical laminate of any one of claims 1 to 8 arranged between the first display panel and the second display panel,
wherein the first pressure-sensitive adhesive layer of the optical laminate is bonded to the first display panel.

FIG.1

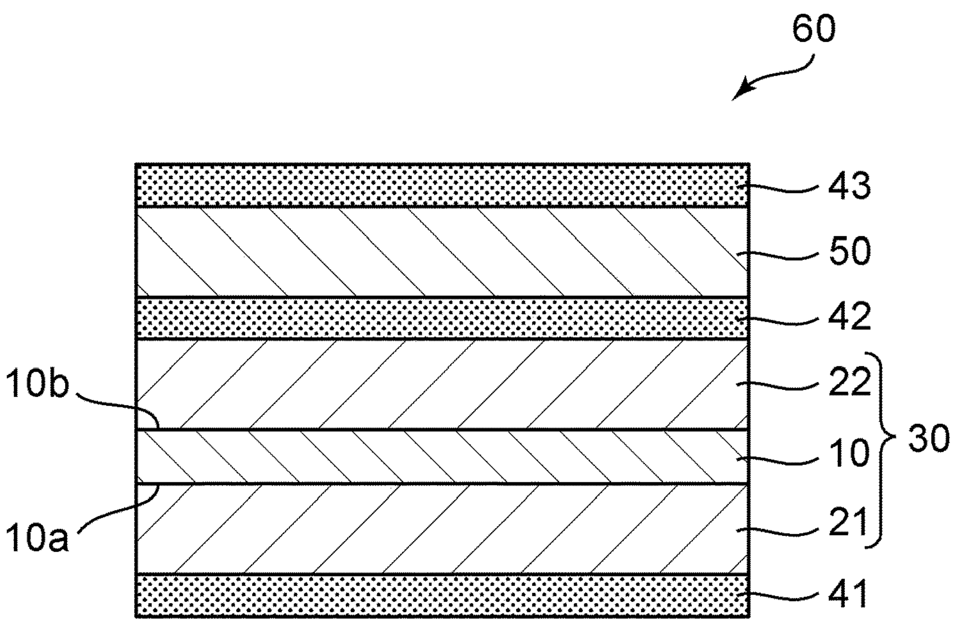

FIG.2

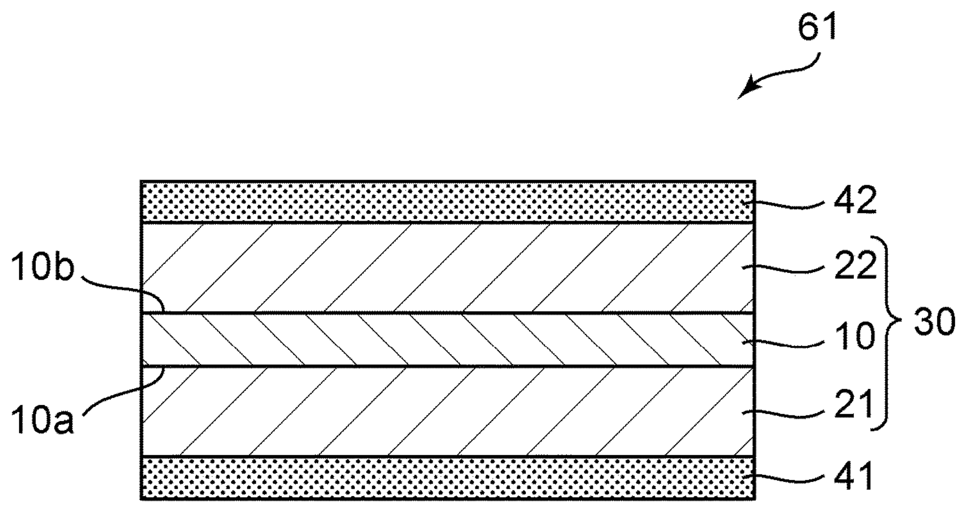

FIG.3

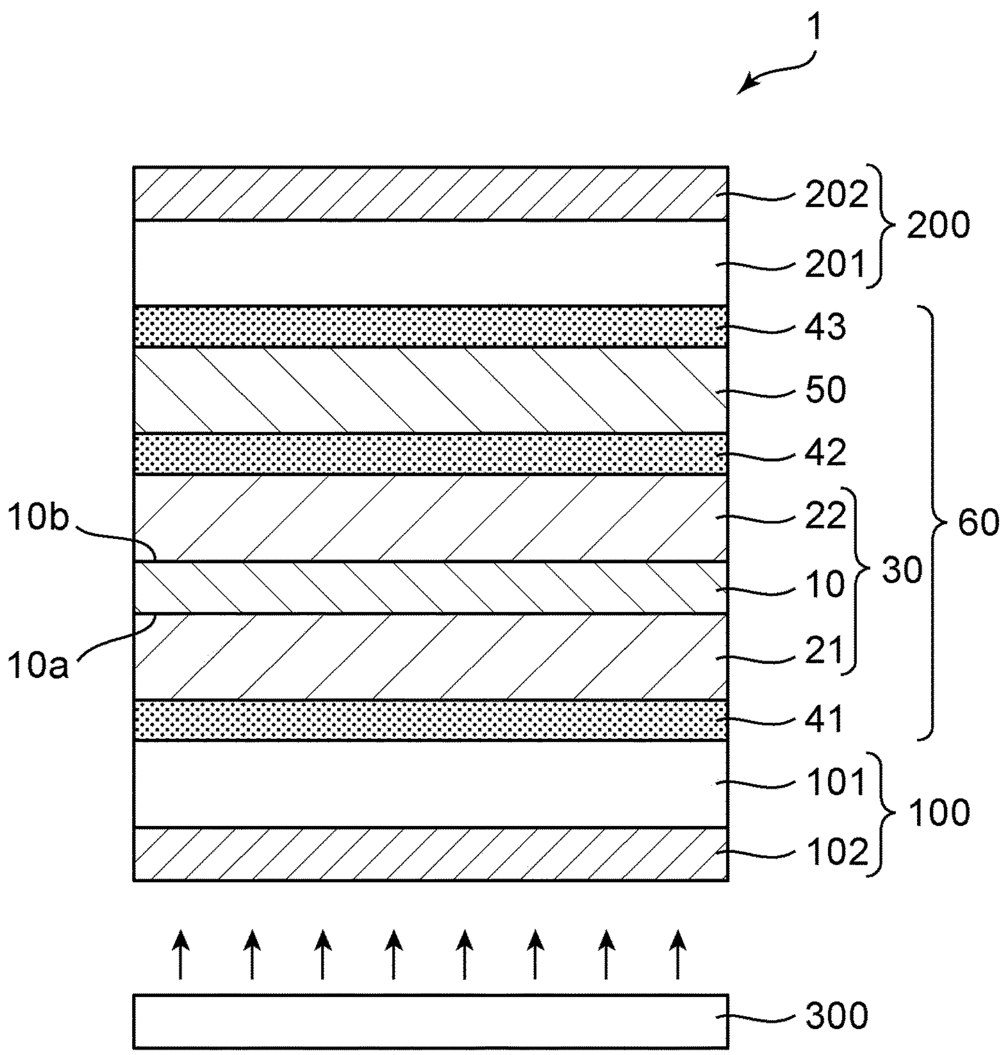

Europäisches Patentamt
European Patent Office
Office européen des brevets

# EUROPEAN SEARCH REPORT

Application Number
EP 24 20 5548

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2020/100869 A1 (NITTO DENKO CORP [JP]) 22 May 2020 (2020-05-22)<br>* claims 1, 4 *<br>* figure 1 *<br>* paragraph [0109] - paragraph [0125] *<br>----- | 1-9 | INV.<br>G02B5/30<br>G02B5/02 |
| Y | WO 2009/025360 A1 (SUMITOMO CHEMICAL CO [JP]; KAWAMURA TAKAHITO [JP] ET AL.) 26 February 2009 (2009-02-26)<br>* claims 1, 17 *<br>* page 25, paragraph 73 *<br>----- | 1-9 | |
| Y | US 2019/258101 A1 (YASUI YOICHI [JP] ET AL) 22 August 2019 (2019-08-22)<br>* claim 1 *<br>* paragraph [0073] *<br>----- | 9 | |

TECHNICAL FIELDS SEARCHED (IPC)

G02B
G02F

The present search report has been drawn up for all claims

1

| Place of search | Date of completion of the search | Examiner |
|---|---|---|
| Munich | 1 March 2025 | Le Masson, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 20 5548

This annex lists the patent family members relating to the patent documents cited in the above-mentioned European search report. The members are as contained in the European Patent Office EDP file on
The European Patent Office is in no way liable for these particulars which are merely given for the purpose of information.

01-03-2025

| Patent document cited in search report | Publication date | Patent family member(s) | Publication date |
|---|---|---|---|
| WO 2020100869 A1 | 22-05-2020 | CN 111819260 A | 23-10-2020 |
| | | CN 111819617 A | 23-10-2020 |
| | | JP 6706399 B1 | 03-06-2020 |
| | | JP 6724269 B1 | 15-07-2020 |
| | | JP 2020129148 A | 27-08-2020 |
| | | JP 2020184078 A | 12-11-2020 |
| | | JP WO2020100869 A1 | 15-02-2021 |
| | | JP WO2020100870 A1 | 15-02-2021 |
| | | KR 20200105959 A | 09-09-2020 |
| | | KR 20200108079 A | 16-09-2020 |
| | | KR 20210075966 A | 23-06-2021 |
| | | TW 202024687 A | 01-07-2020 |
| | | TW 202024688 A | 01-07-2020 |
| | | WO 2020100869 A1 | 22-05-2020 |
| | | WO 2020100870 A1 | 22-05-2020 |
| WO 2009025360 A1 | 26-02-2009 | CN 101784923 A | 21-07-2010 |
| | | JP 5571953 B2 | 13-08-2014 |
| | | JP WO2009025360 A1 | 25-11-2010 |
| | | KR 20100058462 A | 03-06-2010 |
| | | TW 200928463 A | 01-07-2009 |
| | | WO 2009025360 A1 | 26-02-2009 |
| US 2019258101 A1 | 22-08-2019 | CN 109983397 A | 05-07-2019 |
| | | JP 6795615 B2 | 02-12-2020 |
| | | JP WO2018096569 A1 | 17-10-2019 |
| | | US 2019258101 A1 | 22-08-2019 |
| | | WO 2018096569 A1 | 31-05-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2007310161 A
- US 4619956 A
- US 4839405 A
- JP 2003064022 A
- JP HEI11222462 A
- JP 2002284737 A
- WO 2016047655 A1
- JP 2013129809 A
- JP 2013129691 A